# EUROPÄISCHE PATENTSCHRIFT

(11) **EP 3 886 580 B1**
(45) Veröffentlichungstag und Bekanntmachung des Hinweises auf die Patenterteilung: **03.07.2024**
(21) Anmeldenummer: 19816527.6
(22) Anmeldetag: 25.11.2019
(51) Int. Cl.: A01N 25/02, A01N 43/80

(54) **WÄSSRIGE 1,2-BENZISOTHIAZOLIN-3-ON-KONZENTRATE**
AQUEOUS CONCENTRATES COMPRISING 1,2-BENZISOTHIAZOLIN-3-ONE
CONCENTRÉS AQUEUX COMPRENANT DU 1,2-BENZISOTHIAZOLIN-3-ONE

(30) Priorität: 30.11.2018 EP 18000931
(43) Veröffentlichungstag der Anmeldung: 06.10.2021
(73) Patentinhaber: THOR GmbH, 67346 Speyer (DE)
(72) Erfinder: BAUM, Rüdiger, 68809 Neulussheim (DE); WUNDER, Thomas, 67435 Neustadt a.d. Weinstrasse (DE); SCHMIDT, Hans-Jürgen, 67346 Speyer (DE); HAHN, Peter Erich, 68262 Lampertheim (DE)
(86) Internationale Anmeldenummer: PCT/EP2019/000319
(87) Internationale Veröffentlichungsnummer: WO 2020/108784

(56) Entgegenhaltungen:
- EP-A1- 3 360 413
- EP-A2- 1 902 617
- EP-A2- 1 908 349
- WO-A1-94/16564

## Beschreibung

Die Erfindung betrifft eine wässrige Biozidzusammensetzung, enthaltend die Komponenten: (a) 9 Gew.-% bis 11,5 Gew.-% 1,2-Benzisothiazolin-3-on, (b) ein gelöstes Alkalisierungsmittel, enthaltend 0,95 bis 1,05 Mol Natrium- und Kaliumhydroxid, bezogen auf je ein Mol des als Komponente (a) enthaltenen 1,2-Benzisothiazolin-3-ons, und (c) mehr als 60 Gew.-% Wasser. Die Biozidzusammensetzung ist dadurch gekennzeichnet, dass die Zusammensetzung: (i) einen pH-Wert im Bereich von pH 9,5 bis pH 11,9 aufweist, und (ii) der molare Anteil an Natriumionen, bezogen auf die in der Zusammensetzung enthaltenen Natrium- und Kaliumionen, im Bereich von 15 bis 45 Mol% liegt. Die Erfindung betrifft ferner die Verwendung dieser Biozidzusammensetzungen zur Konservierung von wasserbasierten Produkten aller Art, wie Reinigungs- und Haushaltsprodukten, Kunststoffdispersionen, Farben, Putzen, Klebstoffen, Dichtungsmassen, Papierbeschichtungsmassen, Textilweichmacher- und Schlichtungsmitteln, Waschrohstoffen, Tensiden, Poliermitteln, Spinnbädern, Kühlschmierstoffen, Lederbehandlungsmitteln und Silikon- und Bitumenemulsionen.

Das 1,2-Benzisothiazolin-3-on (BIT) bzw. dessen Natrium-, Kalium- und Lithiumsalze ist ein seit langem in der Praxis verwendeter Wirkstoff zur Herstellung mikrobizid wirksamer Formulierungen. Der Wirkstoff zeichnet sich aus über eine gute chemische und thermische Stabilität, und verfügt grundsätzlich über eine breite antimikrobielle Wirkung gegenüber Bakterien, Pilzen und Hefen.

Um diesen Wirkstoff in leicht handhabbarer und gut dosierbarer Form zur Verfügung zu stellen, werden aus dem bei der Synthese anfallenden rohen BIT zumeist wässrige Dispersionen oder wässrige Lösungen herstellt.

Zur Herstellung vermeintlich stabiler wässriger BIT-Lösungen, werden gemäß der Lehre der DE 28 40 273 A1, dem BIT in Form seines in Wasser gelösten Alkalisalzes gewisse Hydroxylgruppen enthaltende organische Lösungsmittel, wie Propylenglykol, zugesetzt.

Weiterhin offenbart die U.S. Patentschrift U.S. 4,871,754 wässrige Formulierungen des Lithiumsalzes des 1,2-Benzisothiazolin-3-ons. Diese Zubereitungen sind bei höheren BIT-Konzentrationen jedoch nicht hinreichend kältestabil und erfordern den Zusatz eines wasser-mischbaren organischen Lösemittels, wie 1,2 Propylenglykol.

Die vorstehend genannten Formulierungen, die Lösemittel, wie Glykole enthalten, sind jedoch aus wirtschaftlichen Gesichtspunkten nicht kosteneffektiv und zudem wenig umweltfreundlich bzw. nicht biologisch abbaubar. Daher ist es vorteilhaft, auf möglichst hoch konzentrierte wässrige Lösungen von 1,2-Benzisothiazolin-3-on die frei von Lösungsmitteln auf Glykolbasis sind, zurückgreifen zu können.

Die PCT-Offenlegungsschrift WO 2012/158425 A1 offenbart hoch konzentrierte wässrige Lösungen von 1,2-Benzisothiazolin-3-on, die etwa 0,1 bis etwa 30 Gew.-% 1,2-Benzisothiazolin-3-on, etwa 5 bis 15 Gew.-% Alkalimetallsalz, etwa 50 bis etwa 85 Gew.-% Wasser und etwa 0,1 bis etwa 5 Gew.-%. Chelatbildner enthalten. Beim Nachstellen von Zusammensetzungen gemäß dieser Druckschrift hat sich jedoch herausgestellt, dass diese nicht hinreichend lagerstabil sind.

Weiterhin sind wässrige Lösungen von 1,2-Benzisothiazolin-3-on mit einem Gehalt an 1,2-Benzisothiazolin-3-on von 9,08 bzw. 9,38 Gew.-% kommerziell erhältlich. Beispielsweise wird unter dem Markennamen Mergal^{®} K10N von der Troy Corporation eine wässrige 1,2-Benzisothiazolin-3-onlösung vertrieben, die einen pH-Wert von 12,85 aufweist und 9,38 Gew.-% 1,2-Benzisothiazolin-3-on in Form seines Kaliumsalzes enthält. Ferner wird unter dem Markennamen Proxel^{®} AQ von der Lonza Group AG eine wässrige 1,2-Benzisothiazolin-3-onlösung vertrieben, die einen pH-Wert von 11,7 aufweist und 9,08 Gew.-% 1,2-Benzisothiazolin-3-on in Form seines Kaliumsalzes enthält.

Die europäische Offenlegungsschrift EP 1 902 617 A2 offenbart eine wässrige Zusammensetzung, enthaltend 9 Gew.-% BIT, 3,6 Gew.-% Kaliumhydroxid und 0,9 Gew.-% Natriumhydroxid. Weiter enthalten sind Phenoxyethanol und

Natriumpyrithion. Der pH-Wert beträgt 13 bis 14 und die Zusammensetzung kann bei -5 °C gelagert werden. In der Zusammensetzung kann BIT in einer Menge zwischen 1 und 20 Gew.-% enthalten sein.

Die europäische Offenlegungsschrift EP 1 908 349 A2 offenbart eine wässrige Zusammensetzung, enthaltend 9 Gew.-% BIT, 3,6 Gew.-% Kaliumhydroxid und 0,9 Gew.-% Natriumhydroxid. Weiter enthalten ist Natriumpyrithion. Der pH-Wert liegt im Bereich von 13 bis 14.

Die WO 94/16564 A1 offenbart eine Zusammensetzung, enthaltend zwischen 5 und 25 Gew.-% BIT und Alkalimetallhydroxid. Das Alkalimetallhydroxid kann eines oder mehrere ausgewählt aus Lithium-, Natrium- oder Kaliumhydroxid sein und wird in einer Menge von 0,95 bis 1,02 Mol Hydroxid pro Mol BIT eingesetzt. Der pH-Wert liegt zwischen pH 8,9 und pH 10,0.

Ausgehend von dem Stand der Technik ist es Aufgabe der Erfindung, gegenüber den aus dem Stand der Technik bekannten Zusammensetzungen stabilere, wässrige 1,2-Benzisothiazolin-3-onzusammensetzungen mit einem möglichst hohen Gehalt an 1,2-Benzisothiazolin-3-on zur Verfügung zu stellen. Eine weitere Aufgabe der Erfindung besteht darin, möglichst konzentrierte stabile wässrige 1,2-Benzisothiazolin-3-onzusammensetzungen bereitzustellen, die frei von VOC enthaltenden Lösungsmitteln und frei von Lösungsmitteln auf Glykolbasis sind.

Gelöst wird diese Aufgabe durch eine wässrige Biozidzusammensetzung, enthaltend die Komponenten:
(a) 9 Gew.-% bis 11,5 Gew.-% 1,2-Benzisothiazolin-3-on,
(b) ein gelöstes Alkalisierungsmittel, enthaltend 0,95 bis 1,05 Mol Natrium- und Kaliumhydroxid, bezogen auf je ein Mol des als Komponente (a) enthaltenen 1,2-Benzisothiazolin-3-ons, und
(c) mehr als 60 Gew.-% Wasser,
dadurch gekennzeichnet, dass die Zusammensetzung:
(i) einen pH-Wert im Bereich von pH 9,5 bis pH 11,9 aufweist, und
(ii) der molare Anteil an Natriumionen, bezogen auf die in der Zusammensetzung enthaltenen Natrium- und Kaliumionen, im Bereich von 15 bis 45 Mol% liegt.

Überraschenderweise wurden im Rahmen der vorliegenden Erfindung nun neue, gegenüber den aus dem Stand der Technik bekannten Zusammensetzungen stabilere, wässrige Biozidzusammensetzungen auf Basis von 1,2-Benzisothiazolin-3-on, im Folgenden auch als BIT bezeichnet, gefunden, die die Nachteile des Standes der Technik vorteilhafterweise überwinden. Insbesondere werden im Rahmen der vorliegenden Erfindung wässrige 1,2-Benzisothiazolin-3-onzusammensetzungen mit einem Gehalt an 1,2-Benzisothiazolin-3-on im Bereich von 9 Gew.-% bis 11,5 Gew.-%, bevorzugt im Bereich von 9 bis 10,5 Gew.-% zur Verfügung gestellt, die sich aufgrund des höheren 1,2-Benzisothiazolin-3-ongehalts durch eine einfachere Dosierbarkeit, als die aktuell erhältlichen 1,2-Benzisothiazolin-3-onzusammensetzungen, auszeichnen. Die Biozidzusammensetzungen zeichnen sich ferner durch eine vorteilhafte Viskosität sowie eine verbesserte Lager- und Farbstabilität aus.

Im Rahmen der vorliegenden Erfindung werden Biozidzusammensetzungen zur Verfügung gestellt, die gegenüber den aus dem Stand der Technik bekannten Zusammensetzungen verbesserte Lagerstabilitäten aufweisen. Lagerstabil bedeutet dabei, dass die erfindungsgemäßen Zusammensetzungen bei längerem Lagern nahezu keine Feststoffe abscheiden.

Im Rahmen der Erfindung wurde dabei gefunden, dass sich erfindungsgemäße Biozidzusammensetzungen mit einem Gehalt an 1,2-Benzisothiazolin-3-on von 9 bis 11,5 Gew.-% erhalten lassen, die trotz des hohen Gehalts an 1,2-Benzisothiazolin-3-on bei Raumtemperatur von bis zu etwa 19°C eine ausreichende Lagerstabilität aufweisen. Derartige Zusammensetzungen werden vorteilhafterweise saisonal eingesetzt oder in wärmeren Regionen verwendet, in denen die Lager- und Anwendungstemperaturen nicht unterhalb von 19°C liegen.

Ferner wurden im Rahmen der Erfindung Biozidzusammensetzungen mit einem Gehalt an 1,2-Benzisothiazolin-3-on von 9 bis 11,5 Gew.-% erhalten, die trotz des hohen Gehalts an 1,2-Benzisothiazolin-3-on bei Raumtemperatur von bis zu etwa 10°C eine ausreichende Lagerstabilität aufweisen. Derartige Zusammensetzungen werden vorteilhafterweise saisonal eingesetzt oder in Regionen verwendet, in denen die Lager- und Anwendungstemperaturen nicht unterhalb von 10°C liegen.

Als besonders stabil haben sich im Rahmen der Erfindung Biozidzusammensetzungen mit einem Gehalt an 1,2-Benzisothiazolin-3-on im Bereich von 9 bis 10,5 Gew.-% herausgestellt. Diese Zusammensetzungen zeichnen sich in vorteilhafter Weise dadurch aus, dass sie bei längerem Lagern nahezu keine Feststoffe abscheiden und auch bei anhaltenden Temperaturen von etwa 2 °C nicht auskristallisieren, oder sich verfestigen. Als Komponente (a) enthält die erfindungsgemäße Biozidzusammensetzung 9 Gew.-% bis 11,5 Gew.-%, bevorzugt 9,5 bis 10,5 Gew.-% 1,2-Benzisothiazolin-3-on, jeweils bezogen auf das Gesamtgewicht der Biozidzusammensetzung. Bei der Berechnung der Menge des 1,2-Benzisothiazolin-3-ons in der Biozidzusammensetzung wird die Menge des in der Zusammensetzung enthaltenen Alkalisierungsmittels, das zur Lösung des 1,2-Benzisothiazolin-3-ons verwendet wurde, nicht berücksichtigt. Als Komponente (a) wird daher nur das Biozid 1,2-Benzisothiazolin-3-on berücksichtigt.

Als Komponente (b) enthält die erfindungsgemäße Biozidzusammensetzung ein in der Zusammensetzung gelöstes Alkalisierungsmittel, das 0,95 bis 1,05 Mol, bevorzugt 0,97 bis 1,03 Mol, besonders bevorzugt 0,98 bis 1,02 Mol Natrium- und Kaliumhydroxid, bezogen auf je ein Mol des als Komponente (a) enthaltenen 1,2-Benzisothiazolin-3-ons, enthält. Die Komponente (b), das in der Zusammensetzung in gelöster Form enthaltene Gemisch aus Natrium- und Kaliumhydroxid, welche annähernd äquimolar zu der Komponente (a) in der Zusammensetzung enthalten ist, bewirkt, dass die Komponente (a), das 1,2-Benzisothiazolin-3-on, in der Zusammensetzung in Form seines gelösten Natrium- und Kaliumsalzes vorliegt. Durch die kombinierte Verwendung von Kalium- und Natriumhydroxid als Neutralisationsmittel innerhalb des beanspruchten Bereiches, an Stelle des in der U.S. Patentschrift U.S. 4,871,754 geforderten Lithiumhydroxids lassen sich gegenüber dem Stand der Technik deutlich preisgünstigere und ebenfalls stabile Biozidzusammensetzungen erhalten.

Als Komponente (c) enthält die erfindungsgemäße Biozidzusammensetzung mehr als 60 Gew.-% Wasser, in dem die Komponenten (a) und (b) gelöst sind. Gemäß einer bevorzugten Ausführungsform der Erfindung ist die erfindungsgemäße Biozidzusammensetzung dadurch gekennzeichnet, dass sie einen Wassergehalt im Bereich von 70 Gew.-% bis 89 Gew.-%, bevorzugt einen Wassergehalt im Bereich von 81 Gew.-% bis 89 Gew.-%, jeweils bezogen auf das Gesamtgewicht der Biozidzusammensetzung, aufweist. Als Wasser ist in der erfindungsgemäßen Biozidzusammensetzung bevorzugt entionisiertes Wasser, beziehungsweise Weichwasser enthalten. Sollten die erfindungsgemäßen Biozidzusammensetzungen als Wasser auch nicht-entionisiertes Wasser enthalten, also auch Spuren von Ca- und Mg-Ionen, dann sollten in den Zusammensetzungen gemäß einer vorteilhaften Ausführungsform der Erfindung weiterhin dem Fachmann bekannte Komplexbildner enthalten sein.

Erfindungsgemäß ist die Biozidzusammensetzung dadurch gekennzeichnet, dass diese gemäß Merkmal (i) einen pH-Wert im Bereich von pH 9,5 bis pH 11,9, bevorzugt im Bereich von pH 10,0 bis pH 11,5 aufweist.

Erfindungsgemäß ist die Biozidzusammensetzung ferner dadurch gekennzeichnet, dass gemäß Merkmal (ii) der molare Anteil an Natriumionen bezogen auf die in der Zusammensetzung enthaltenen Natrium- und Kaliumionen im Bereich von 15 bis 45 Mol%, bevorzugt im Bereich von 20 bis 39 Mol% liegt.

Durch die kombinierte Verwendung von Kalium- und Natriumhydroxid als Neutralisationsmittel innerhalb des beanspruchten Bereiches sowie die molaren Anteile der Natrium- und Kaliumionen in der Zusammensetzung, (Merkmal (ii), lassen sich gegenüber dem Stand der Technik deutlich preisgünstigere und überraschend stabile Biozidzusammensetzungen erhalten.

Die erfindungsgemäßen stabilen Biozidzusammensetzungen weisen eine Viskosität, gemessen nach Brookfield bei 20 °C mit Spindel 1 bei 30 U/min von kleiner 50 mPas, bevorzugt von kleiner 10 mPas auf.

Gemäß einer Ausführungsform der Erfindung, enthält die erfindungsgemäße Biozidzusammensetzung ferner als Komponente (d) wenigstens ein 2-Mercaptopyridin-N-oxid bzw. dessen in der Zusammensetzung gelöstes Salz. Beispiele für Salze von 2-Mercaptopyridin-N-oxid sind Alkali-, Erdalkali- und Aminsalze und quartäre Ammoniumsalze, beispielsweise Na-, K-, Li-, Ca-, Mg-, Ammonium-, 2-Hydroxyethylammonium- und Triethylammonium-Salze und Gemische davon. Bevorzugt ist das Natriumsalz des 2-Mercaptopyridin-N-oxids. Komponente (d) ist gemäß einer bevorzugten Ausführungsform als Salz, beispielsweise als Natriumpyrithion, in der Zusammensetzung enthalten. In einer bevorzugten Ausführungsform beträgt die Menge der Komponente (d) in der erfindungsgemäßen Zubereitung 1 bis 15 Gew.-%, vorzugsweise 1 bis 12 Gew.-%, bevorzugter 2,5 bis 10 Gew.-%, jeweils bezogen auf das Gesamtgewicht der Biozidzusammensetzung.

Dem Fachmann ist bekannt, dass die erfindungsgemäß vorgeschriebenen Komponenten (a), (b) und gegebenenfalls (d) miteinander reagieren können. Beispielsweise kann es zur Salzbildung des (a) 1,2-Benzisothiazolons und/oder (d) des 2-Mercaptopyridin-N-oxids mit (b) dem Alkalisierungsmittel kommen. Gegenstand der Erfindung ist dementsprechend auch eine Zubereitung, die durch Mischen der Komponenten (a) bis (c) und gegebenenfalls (d) hergestellt ist.

Die erfindungsgemäßen Biozidzusammensetzungen enthalten, falls notwendig, neben den Komponenten (a), (b), (c) und gegebenenfalls (d) gegebenenfalls weitere Komponenten, wie Verdicker, Entschäumer und Dispergiermittel. Diese sind dem Fachmann bekannt und sind je nach Bedarf in entsprechender Menge in der Zusammensetzung enthalten.

Eine Zusammensetzung, enthaltend ausschließlich die Komponenten (a), (b), (c) und gegebenenfalls (d) in den angegebenen Gewichtsverhältnissen, ohne Vorliegen einer weiteren mikrobiziden Wirkkomponente, wird im Rahmen der vorliegenden Erfindung als "erfindungsgemäße Biozidzusammensetzung" bezeichnet. Die "erfindungsgemäße Biozidzusammensetzung" kann neben den Komponenten (a), (b), (c) und gegebenenfalls (d) in den angegebenen Gewichtsverhältnissen ein oder mehrere weitere Bestandteile aufweisen. Der oder die weiteren Bestandteile können dabei eine mikrobizide Wirkung aufweisen, oder sie können keine mikrobizide Wirkung aufweisen, also etwa ein Lösungsmittel, Dispergiermittel oder Suspensionsmittel sein.

In einer weiteren Ausführungsform besteht die "erfindungsgemäße Biozidzusammensetzung" aus den Komponenten (a), (b), (c) und gegebenenfalls (d) in den oben angegebenen Mengenverhältnissen (also der erfindungsgemäßen Biozidzusammensetzung). Dies bedeutet, dass die erfindungsgemäße Zusammensetzung ausschließlich die Komponenten (a), (b), (c) und gegebenenfalls (d) enthält.

In einer weiteren Ausführungsform der Erfindung besteht die erfindungsgemäße Biozidzusammensetzung "im Wesentlichen" aus den erfindungsgemäßen Komponenten (a), (b), (c) und gegebenenfalls (d) d.h., dass neben diesen wohl noch ein oder auch mehrere andere Biozide enthalten sein können, diese aber in einer solchen Menge vorliegen, in der kein Beitrag des jeweiligen von den Komponenten der erfindungsgemäßen mikrobiziden Wirkkomponenten verschiedenen Biozids zum Gesamteffekt der entstehenden Mischung vorliegt.

Gemäß einer bevorzugten Ausführungsform der Erfindung ist die erfindungsgemäße Zusammensetzung im Wesentlichen frei von flüchtigen organischen Verbindungen (VOC), Glykolen, Derivaten von Glykolen, wie 1,2-Propandiol, Glyzerin und / oder Derivaten von Glycerin. "Im Wesentlichen frei" bedeutet in diesem Zusammenhang, dass die Zusammensetzung 0 bis 5 Gew.-%, bevorzugt 0 bis 2 Gew.-%, besonders bevorzugt 0 bis 0,5 Gew.-% flüchtige organische Verbindungen (VOC), Glykole, Derivate von Glykolen, Glyzerin und / oder Derivate von Glycerin enthält. Gemäß einer besonders bevorzugten Ausführungsform Erfindung ist die erfindungsgemäße Zusammensetzung frei von flüchtigen organischen Verbindungen (VOC), Glykolen, Derivaten von Glykolen, Glyzerin und / oder Derivaten von Glycerin. Gemäß einer weiteren besonders bevorzugten Ausführungsform Erfindung ist die erfindungsgemäße Zusammensetzung dadurch gekennzeichnet, dass die Zusammensetzung weniger als 1 Gew.-% 1,2-Propandiol enthält.

Die erfindungsgemäße Biozidzusammensetzung kann dadurch hergestellt werden, indem man das 1,2-Benzisothiazolin-3-on, vorzugsweise in Form eines feuchten Filterkuchens unter Rühren bei einer Temperatur von etwa 20 bis 60 °C in Wasser suspendiert. Daraufhin wird Kaliumhydroxid und auch Natriumhydroxid in Form einer wässrigen Lösung zugegeben. Das erhaltene Gemisch wird bei einer Temperatur von etwa 20 bis 60 °C gerührt, bis sich der Feststoff aufgelöst hat. Die erhaltene Biozidzusammensetzung kann daran anschließend gegebenenfalls entweder warm oder nach dem Abkühlen auf Umgebungsbedingungen filtriert werden.

Die Erfindung betrifft ferner die Verwendung der vorstehend definierten Biozidzusammensetzungen zur Konservierung von wasserhaltigen oder wasserverdünnbaren technischen oder Produkten vor Befall und/oder Zerstörung durch Mikroorganismen. Bevorzugt können mit den erfindungsgemäßen Zusammensetzungen funktionelle Flüssigkeiten und wasserhaltige technische Produkte, die anfällig sind gegenüber mikrobiellem Befall, konserviert werden.

Die Verwendung der erfindungsgemäßen Biozidzusammensetzungen ist aufgrund des breiten Wirkspektrums des BIT besonders geeignet für die Konservierung von Reinigungs- und Haushaltsprodukten, Kunststoffdispersionen, Farben, Putzen, Klebstoffen, Dichtungsmassen, Papierbeschichtungsmassen, Textilweichmacher- und Schlichtungsmitteln, Waschrohstoffen, Tensiden, Poliermitteln, Spinnbädern, Kühlschmierstoffen, Lederbehandlungsmitteln und Silikon- und Bitumenemulsionen. Besonders bevorzugt eignen sich die erfindungsgemäßen Biozidzusammensetzungen für die Konservierung von Kühlschmierstoffen, Reinigungs- und Haushaltsprodukten.

Die Anwendungskonzentrationen der erfindungsgemäß zu verwendenden Biozidzusammensetzung richten sich nach der Art und dem Vorkommen der zu bekämpfenden Mikroorganismen, der mikrobiellen Ausgangsbelastung sowie nach der Zusammensetzung des zu schützenden technischen Produkts bzw. Materials. Die optimale Einsatzmenge für eine bestimmte Anwendung kann vor dem Praxiseinsatz durch Testreihen im Labor ermittelt werden. Im Allgemeinen liegen die Anwendungskonzentrationen im Bereich von 0,01 bis 5 Gew.-%, vorzugsweise von 0,05 bis 1,0 Gew.-% der erfindungsgemäßen Biozidzusammensetzung, bezogen auf das zu schützende technische Produkt, bzw. Material.

Die Erfindung betrifft daher gemäß einer Ausführungsform auch ein wasserhaltiges technisches Produkt, ausgewählt aus Reinigungs- und Haushaltsprodukten, Kunststoffdispersionen, Farben, Putzen, Klebstoffen, Dichtungsmassen, Papierbeschichtungsmassen, Textilweichmacher- und Schlichtungsmitteln, Waschrohstoffen, Tensiden, Poliermitteln, Spinnbädern, Kühlschmierstoffen, Lederbehandlungsmitteln und Silikon- und Bitumenemulsionen, das die erfindungsgemäße Biozidzusammensetzung bevorzugt in einer Menge im Bereich von 0,01 bis 5 Gew.-%, vorzugsweise von 0,05 bis 1,0 Gew.-%, bezogen auf das zu schützende technische Produkt, enthält.

Die Erfindung betrifft ferner ein Verfahren zum Kontrollieren des Wachstums mindestens eines Mikroorganismus' in einer wässrigen Flüssigkeit, umfassend den Schritt des Zugebens einer Biozidzusammensetzung, enthaltend die Komponenten:
(a) 9 Gew.-% bis 11,5 Gew.-% 1,2-Benzisothiazolin-3-on,
(b) ein gelöstes Alkalisierungsmittel, enthaltend 0,95 bis 1,05 Mol Natrium- und Kaliumhydroxid, bezogen auf je ein Mol des als Komponente (a) enthaltenen 1,2-Benzisothiazolin-3-ons, und
(c) mehr als 60 Gew.-% Wasser,
dadurch gekennzeichnet, dass die Zusammensetzung:
(i) einen pH-Wert im Bereich von pH 9,5 bis pH 11,9 aufweist, und
(ii) der molare Anteil an Natriumionen bezogen auf die in der Zusammensetzung enthaltenen Natrium- und Kaliumionen im Bereich von 15 bis 45 Mol% liegt,
zu einer wässrigen Flüssigkeit, so dass das Wachstum des wenigstens einen Mikroorganismus in der Flüssigkeit inhibiert, oder wenigstens gehemmt ist. Gemäß einer Ausführungsform der Erfindung ist die wässrige Flüssigkeit ein Reinigungs- oder Haushaltsprodukt.

Gemäß einer bevorzugten Ausführungsform der Erfindung enthält die Biozidzusammensetzung die folgenden Komponenten, beziehungsweise besteht aus den folgenden Komponenten:
Formulierungsbeispiel 1:
   (a) 10 Gew.-% 1,2-Benzisothiazolin-3-on,
   (b) 2,68 Gew.-% Kaliumhydroxid,
   (c) 0,75 Gew.-% ein Natriumhydroxid und
   (d) 86,57 Gew.-% Wasser
Formulierungsbeispiel 2:
   (a) 9,25 Gew.-% 1,2-Benzisothiazolin-3-on,
   (b) 2,48 Gew.-% Kaliumhydroxid,
   (c) 0,70 Gew.-% ein Natriumhydroxid und
   (d) 87,57 Gew.-% Wasser

**Die folgenden Beispiele und Vergleichsbeispiele dienen zur weiteren Veranschaulichung der vorliegenden Erfindung.**

### Untersuchung der Lagerstabilität von Biozidzusammensetzungen:

Zur Untersuchung der Lagerstabilität von Biozidzusammensetzungen mit einem 1,2-Benzisothiazolin-3-ongehalt im Bereich von 9,5 bis 20 Gew.-%, wurden die in den nachfolgenden Tabellen charakterisierten Biozidzusammensetzungen hergestellt und über einen Zeitraum von 14 Tagen bei Raumtemperatur, 5°C, 2°C und 0°C (Tabelle 1) bzw. bei Raumtemperatur, 12°C, 10°C, 5°C, 2°C, 0°C, -2°C und -5°C (Tabelle 2) gelagert, wobei im Abstand von jeweils 7 Tagen 2 mal mit Kristallen der enthaltenen BIT-Salze angeimpft wurde.

Wie man den nachfolgend dargestellten Tabellen 1 und 2 entnehmen kann, lassen sich innerhalb des beanspruchten Bereichs, insbesondere durch die kombinierte Verwendung von Natron- und Kalilauge als Neutralisationsmittel, bei tieferen Temperaturen lagerstabile Zusammensetzungen des 1,2-Benzisothiazolin-3-ons mit einem 1,2-Benzisothiazolin-3-ongehalt von bis zu 20 Gew.-% erhalten.

Die Vergleichsbeispiele V6 und V7 wurden gemäß den Beispielen 8 und 9 der US2015/0126479A1 hergestellt. Dabei enthielt Vergleichsbeispiel V6(¹) 2,4 Gew.-% Tetranatrium-N,N-bis(carboxylatomethyl)-L-glutamat und Vergleichsbeispiel V7(²) 0,25 Gew.-% Tetranatrium-N,N-bis(carboxylatomethyl)-L-glutamat. Wie aus den in der Tabelle 1 dargestellten Ergebnissen hervorgeht, lassen sich entgegen der Lehre von US 2015/0126479A1 keine stabilen BIT-Konzentrate erhalten.

**Tabelle 1:**

| Probe | Konzentrationen [Gew.%] | | | pH | Stabilität | | | | Molares Verhältnis K/Na |
|---|---|---|---|---|---|---|---|---|---|
| | BIT | KOH | NaOH | | RT | 5°C | 2°C | 0°C | |
| V1 | 9,5 | 3,53 | - | 11,2 | + | o | - | - | - |
| V2 | 10 | 3,72 | - | 11,3 | + | - | - | - | - |
| V3 | 10 | - | 2,65 | 11,2 | - | - | - | - | - |
| V4 | 10 | 1,86 | 1,33 | 11,3 | + | - | - | - | 50/50 |
| V5 | 10 | 3,35 | 0,27 | 11,4 | + | - | - | - | 90/10 |
| V6¹ | 19 | 6,25 | - | 9,4 | + | - | - | - | 100/0 |
| V7² | 10 | 3,75 | - | 11,4 | + | - | - | - | 100/0 |
| 1 | 10 | 2,98 | 0,53 | 11,2 | + | + | + | - | 80/20 |
| 2 | 10 | 2,6 | 0,8 | 11,2 | + | + | + | o | 70/30 |
| 3 | 10 | 2,42 | 0,93 | 11,1 | + | + | + | o | 65/35 |
| 4 | 10 | 2,23 | 1,06 | 11,2 | + | + | + | - | 60/40 |
| 5 | 10 | 2,87 | 0,54 | 10 | + | + | + | - | 79/21 |
| 6 | 10 | 2,87 | 0,63 | 11 | + | + | + | - | 77/23 |
| 7 | 10 | 2,87 | 0,75 | 12 | + | + | + | - | 73/27 |

| | | | | | | | | | |
|---|---|---|---|---|---|---|---|---|---|
| BIT: 1,2-Benzisothiazolin-3-on, Die Proben 1 bis 4 enthielten jeweils ad. 100 Gew.-% Wasser. Als BIT Quelle wurde ein wasserfeuchter Filterkuchen verwendet (85%ig). "0 = minimale Kristallbildung; "-" = stark kristallisiert; "+" = klar gelöst, ohne Kristalle | | | | | | | | | |

**Tabelle 2:**

| Probe | Konzentrationen [Gew.%] | | | pH | Stabilität | | | | | | | | Molares Verhältnis K/Na |
|---|---|---|---|---|---|---|---|---|---|---|---|---|---|
| | BIT | KOH | NaOH | | RT | 12°C | 10°C | 5°C | 2°C | 0°C | -2°C | -5°C | |
| 8 | 9 | 2,43 | 0,67 | 11 | + | + | + | + | + | + | + | o | 72/28 |
| 9 | 9,5 | 2,57 | 0,71 | 11 | + | + | + | + | + | + | + | - | 72/28 |
| 10 | 10 | 2,70 | 0,75 | 11,1 | + | + | + | + | + | + | o | - | 72/28 |
| 11 | 10,5 | 2,84 | 0,79 | 11,1 | + | + | + | + | o | o | - | - | 72/28 |
| 12 | 11 | 2,97 | 0,82 | 11,1 | + | + | + | o | - | - | - | - | 72/28 |
| V13 | 12 | 3,24 | 0,90 | 11,1 | + | + | + | - | - | - | - | - | 72/28 |
| V14 | 13 | 3,51 | 0,97 | 11,1 | + | + | + | - | - | - | - | - | 72/28 |
| V15 | 14 | 3,78 | 1,05 | 11,1 | + | + | + | - | - | - | - | - | 72/28 |
| V16 | 15 | 4,05 | 1,12 | 11,1 | + | + | o | - | - | - | - | - | 72/28 |
| V17 | 16 | 4,32 | 1,20 | 11,1 | + | - | - | - | - | - | - | - | 72/28 |
| V18 | 17 | 4,59 | 1,27 | 11,1 | + | - | - | - | - | - | - | - | 72/28 |
| V19 | 18 | 4,86 | 1,35 | 11,1 | + | - | - | - | - | - | - | - | 72/28 |
| V20 | 19 | 5,13 | 1,42 | 11,1 | + | - | - | - | - | - | - | - | 72/28 |
| V21 | 20 | 5,40 | 1,50 | 11,1 | + | - | - | - | - | - | - | - | 72/28 |
| V8 | 15 | 5,61 | - | 11 | - | - | - | - | - | - | - | - | 100/0 |
| V9 | 15 | - | 4,01 | 11 | - | - | - | - | - | - | - | - | 0/100 |
| V10 | 12 | 4,51 | - | 11,2 | + | o | o | - | - | - | - | - | 100/0 |

| | | | | | | | | | | | | | |
|---|---|---|---|---|---|---|---|---|---|---|---|---|---|
| BIT: 1,2-Benzisothiazolin-3-on, Die Proben 1 bis 4 enthielten jeweils ad. 100 Gew.-% Wasser. Als BIT Quelle wurde ein wasserfeuchter Filterkuchen verwendet (85%ig). "0 = minimale Kristallbildung; "-" = stark kristallisiert; "+" = klar gelöst, ohne Kristalle | | | | | | | | | | | | | |

## Patentansprüche

1. Wässrige Biozidzusammensetzung, enthaltend die Komponenten:
(a) 9 Gew.-% bis 11,5 Gew.-% 1,2-Benzisothiazolin-3-on,
(b) ein gelöstes Alkalisierungsmittel, enthaltend 0,95 bis 1,05 Mol Natrium- und Kaliumhydroxid, bezogen auf je ein Mol des als Komponente (a) enthaltenen 1,2-Benzisothiazolin-3-ons, und
(c) mehr als 60 Gew.-% Wasser,
**dadurch gekennzeichnet, dass** die Zusammensetzung:
(i) einen pH-Wert im Bereich von pH 9,5 bis pH 11,9 aufweist, und
(ii) der molare Anteil an Natriumionen, bezogen auf die in der Zusammensetzung enthaltenen Natrium- und Kaliumionen, im Bereich von 15 bis 45 Mol% liegt.

2. Biozidzusammensetzung nach Anspruch 1, **dadurch gekennzeichnet, dass** der molare Anteil an Natriumionen, bezogen auf die in der Zusammensetzung enthaltenen Natrium- und Kaliumionen, im Bereich von 20 bis 39 Mol% liegt.

3. Biozidzusammensetzung nach Anspruch 1 oder 2, **dadurch gekennzeichnet, dass** die Biozidzusammensetzung einen pH-Wert im Bereich von pH 10,0 bis pH 11,5 aufweist.

4. Biozidzusammensetzung nach einem der Ansprüche 1 bis 3, **dadurch gekennzeichnet, dass** die Biozidzusammensetzung einen Wassergehalt im Bereich von 70 Gew.-% bis 89 Gew.-% aufweist.

5. Biozidzusammensetzung nach einem der Ansprüche 1 bis 4, **dadurch gekennzeichnet, dass** die Biozidzusammensetzung eine Viskosität bei 20°C, gemessen mit Brookfield Spindel, 1 bei 30 U/min von < 50 mPas aufweist.

6. Biozidzusammensetzung nach einem der Ansprüche 1 bis 5, **dadurch gekennzeichnet, dass** die Biozidzusammensetzung 9 Gew.-% bis 10,5 Gew.-% 1,2-Benzisothiazolin-3-on enthält.

7. Biozidzusammensetzung nach einem der Ansprüche 1 bis 5, **dadurch gekennzeichnet, dass** die Zusammensetzung im Wesentlichen frei von flüchtigen organischen Verbindungen (VOC), Glykolen, Derivaten von Glykolen, Glyzerin und / oder Derivaten von Glycerin ist.

8. Verwendung einer Biozidzusammensetzung gemäß einem der Ansprüche 1 bis 7 als Konservierungsmittel zum Schutz von wasserhaltigen technischen Produkten vor Befall und/oder Zerstörung durch Mikroorganismen.

9. Verwendung nach Anspruch 8, **dadurch gekennzeichnet, dass** das wasserhaltige technische Produkt ausgewählt ist aus Reinigungs- und Haushaltsprodukten, Kunststoffdispersionen, Farben, Putzen, Klebstoffen, Dichtungsmassen, Papierbeschichtungsmassen, Textilweichmacher- und Schlichtungsmittel, Waschrohstoffen, Tensiden, Poliermitteln, Spinnbädern, Kühlschmierstoffen, Lederbehandlungsmitteln und Silikon- und Bitumenemulsionen.

10. Wasserhaltiges technisches Produkt, ausgewählt aus Reinigungs- und Haushaltsprodukten, Kunststoffdispersionen, Farben, Putzen, Klebstoffen, Dichtungsmassen, Papierbeschichtungsmassen, Textilweichmacher- und Schlichtungsmittel, Waschrohstoffen, Tensiden, Poliermitteln, Spinnbädern, Kühlschmierstoffen, Lederbehandlungsmitteln und Silikon- und Bitumenemulsionen, enthaltend eine Biozidzusammensetzung nach einem der Ansprüche 1 bis 7.

11. Wasserhaltiges technisches Produkt nach Anspruch 10, enthaltend eine Biozidzusammensetzung nach einem der Ansprüche 1 bis 7 in einem Anteil von 0,01 bis 5 Gew.-%.

12. Verfahren zum Kontrollieren des Wachstums mindestens eines Mikroorganismus' in einer wässrigen Flüssigkeit, umfassend den Schritt des Zugebens einer Biozidzusammensetzung enthaltend die Komponenten:
(a) 9 Gew.-% bis 11,5 Gew.-% 1,2-Benzisothiazolin-3-on,
(b) ein gelöstes Alkalisierungsmittel, enthaltend 0,95 bis 1,05 Mol Natrium- und Kaliumhydroxid, bezogen auf je ein Mol des als Komponente (a) enthaltenen 1,2-Benzisothiazolin-3-ons, und
(c) mehr als 60 Gew.-% Wasser,
**dadurch gekennzeichnet, dass** die Zusammensetzung:
(i) einen pH-Wert im Bereich von pH 9,5 bis pH 11,9 aufweist, und
(ii) der molare Anteil an Natriumionen, bezogen auf die in der Zusammensetzung enthaltenen Natrium- und Kaliumionen, im Bereich von 15 bis 45 Mol% liegt, zu einer wässrigen Flüssigkeit, so dass das Wachstum des wenigstens einen Mikroorganismus in der Flüssigkeit inhibiert ist.

13. Verfahren nach Anspruch 12, **dadurch gekennzeichnet, dass** die wässrige Flüssigkeit ein Kühlschmierstoff, ein Reinigungs- oder Haushaltsprodukt ist.

## Claims

1. An aqueous biocide composition, containing the following components:
(a) 9 wt.% to 11,5 wt.% 1,2-benzisothiazolin-3-one;
(b) a dissolved alkalizing agent, containing 0.95 to 1.05 mol sodium and potassium hydroxide, each based on one mol of the 1,2-benzisothiazolin-3-one present as component (a), and
(c) more than 60 wt.% water,
**characterized in that** the composition:
(i) has a pH value in the range of pH 9.5 to pH 11.9; and
(ii) the molar fraction of sodium ions, based on the sodium and potassium ions contained in the composition, is in the range of 15 to 45 mol%.

2. The biocide composition according to claim 1, **characterized in that** the molar fraction of sodium ions, based on the sodium and potassium ions contained in the composition, is in the range of 20 to 39 mol%.

3. The biocide composition according to claim 1 or 2, **characterized in that** the biocide composition has a pH value in the range of pH 10.0 to pH 11.5.

4. The biocide composition according to any one of claims 1 to 3, **characterized in that** the biocide composition has a water content in the range of 70 wt.% to 89 wt.%.

5. The biocide composition according to any one of claims 1 to 4, **characterized in that** the biocide composition has a viscosity at 20°C, measured using a Brookfield spindle 1 at 30 rpm, of < 50 mPas.

6. The biocide composition according to any one of claims 1 to 5, **characterized in that** the biocide composition contains 9 wt.% to 10.5 wt.% 1,2-benzisothiazolin-3-one.

7. The biocide composition according to any one of claims 1 to 5, **characterized in that** the composition is substantially free of volatile organic compounds (VOC), glycols, derivatives of glycols, glycerol and/or derivatives of glycerol.

8. A use of a biocide composition according to any one of claims 1 to 7 as a preservative for protecting hydrous technical products against infection and/or destruction by microorganisms.

9. The use according to claim 8, **characterized in that** the hydrous technical product is selected from cleaning and household products, plastic dispersions, paints, plasters, adhesives, sealing compounds, paper coating compounds, textile softening and sizing agents, detergent base materials, surfactants, polishing agents, spinning baths, cooling lubricants, leather treatment agents, and silicone and bitumen emulsions.

10. A hydrous technical product, selected from cleaning and household products, plastic dispersions, paints, plasters, adhesives, sealing compounds, paper coating compounds, textile softening and sizing agents, detergent base materials, surfactants, polishing agents, spinning baths, cooling lubricants, leather treatment agents, and silicone and bitumen emulsions, containing the biocide composition according to any one of claims 1 to 7.

11. The hydrous technical product according to claim 10, containing a biocide composition according to any one of claims 1 to 7 in a content of 0.01 to 5 wt.%.

12. A method for controlling the growth of at least one microorganism in an aqueous liquid, comprising the step of adding a biocide composition, containing the following components:
(a) 9 wt.% to 11,5 wt.% 1,2-benzisothiazolin-3-one;
(b) a dissolved alkalizing agent, containing 0.95 to 1.05 mol sodium and potassium hydroxide, each based on one mol of the 1,2-benzisothiazolin-3-one present as component (a), and
(c) more than 60 wt.% water,
**characterized in that** the composition:
(i) has a pH value in the range of pH 9.5 to pH 11.9; and
(ii) the molar fraction of sodium ions, based on the sodium and potassium ions present in the composition, is in the range of 15 to 45 mol,
to an aqueous liquid so that the growth of the at least one microorganism in the liquid is inhibited.

13. The method according to claim 12, **characterized in that** the aqueous liquid is a cooling lubricant, a cleaning product, or a household product.

## Revendications

1. Composition biocide aqueuse contenant les composants :
(a) 9 % en poids à 11,5 % en poids de 1,2-benzisothiazolin-3-one,
(b) un agent d'alcalinisation dissous, contenant 0,95 à 1,05 mole d'hydroxyde de sodium et de potassium par mole de la 1,2-benzisothiazolin-3-one contenue comme composant (a), et
(c) plus de 60 % en poids d'eau,
**caractérisée en ce que** la composition
(i) présente un pH dans la plage de pH 9,5 à pH 11,9, et
(ii) la proportion en moles des ions sodium, rapportée aux ions sodium et potassium contenus dans la composition, étant dans la plage de 15 à 45 % en moles.

2. Composition biocide selon la revendication 1, **caractérisée en ce que** la proportion en moles des ions sodium, rapportée aux ions sodium et potassium contenus dans la composition, est dans la plage de 20 à 39 % en moles.

3. Composition biocide selon la revendication 1 ou 2, **caractérisée en ce que** la composition biocide présente un pH dans la plage de pH 10,0 à pH 11,5.

4. Composition biocide selon l'une des revendications 1 à 3, **caractérisée en ce que** la composition biocide présente une teneur en eau dans la plage de 70 % en poids à 89 % en poids.

5. Composition biocide selon l'une des revendications 1 à 4, **caractérisée en ce que** la composition biocide présente une viscosité à 20 °C, mesurée avec une broche Brookfield 1 à 30 tr/min, < 50 mPa·s.

6. Composition biocide selon l'une des revendications 1 à 5, **caractérisée en ce que** la composition biocide contient 9 % en poids à 10,5 % en poids de 1,2-benzisothiazolin-3-one.

7. Composition biocide selon l'une des revendications 1 à 5, **caractérisée en ce que** la composition est pour l'essentiel exempte de composés organiques volatils (COV), de glycols, de dérivés de glycols, de glycérol et/ou de dérivés du glycérol.

8. Utilisation d'une composition biocide selon l'une des revendications 1 à 7 comme conservateur pour la protection de produits techniques contenant de l'eau vis-à-vis d'une infestation et/ou d'une destruction par des microorganismes.

9. Utilisation selon la revendication 8, **caractérisée en ce que** le produit technique contenant de l'eau est choisi parmi les produits nettoyants et ménagers, les dispersions de plastique, les peintures, les enduits, les adhésifs, les masses d'étanchéité, les masses de couchage du papier, les plastifiants et agents d'encollage, les matières de base de détergents, les tensioactifs, les agents de polissage, les bains de filage, les lubrifiants réfrigérants, les agents de traitement du cuir et les émulsions de silicone et de bitume.

10. Produit technique contenant de l'eau, choisi parmi les produits nettoyants et ménagers, les dispersions de plastique, les peintures, les enduits, les adhésifs, les masses d'étanchéité, les masses de couchage du papier, les plastifiants et agents d'encollage, les matières de base de détergents, les tensioactifs, les agents de polissage, les bains de filage, les lubrifiants réfrigérants, les agents de traitement du cuir et les émulsions de silicone et de bitume, contenant une composition biocide selon l'une des revendications 1 à 7.

11. Produit technique contenant de l'eau selon la revendication 10, contenant une composition biocide selon l'une des revendications 1 à 7 selon une proportion de 0,01 à 5 % en poids.

12. Procédé de maîtrise de la croissance d'au moins un microorganisme dans un liquide aqueux, comprenant l'étape d'addition d'une composition biocide contenant les composants
(a) 9 % en poids à 11,5 % en poids de 1,2-benzisothiazolin-3-one,
(b) un agent d'alcalinisation dissous, contenant 0,95 à 1,05 mole d'hydroxyde de sodium et de potassium par mole de la 1,2-benzisothiazolin-3-one contenue comme composant (a), et
(c) plus de 60 % en poids d'eau,
**caractérisée en ce que** la composition
(i) présente un pH dans la plage de pH 9,5 à pH 11,9, et
(ii) la proportion en moles des ions sodium, rapportée aux ions sodium et potassium contenus dans la composition, étant dans la plage de 15 à 45 % en moles, à un liquide aqueux de façon à inhiber la croissance de l'au moins un microorganisme dans le liquide.

13. Procédé selon la revendication 12, **caractérisé en ce que** le liquide aqueux est un lubrifiant réfrigérant, un produit nettoyant ou ménager.
